# EUROPÄISCHE PATENTANMELDUNG

(11) **EP 4 552 450 A1**
(43) Veröffentlichungstag der Anmeldung: **14.05.2025**
(21) Anmeldenummer: 24210467.7
(22) Anmeldetag: 04.11.2024
(51) Int. Cl.: A01B 63/22, A01B 73/00

(54) **LANDWIRTSCHAFTLICHES FAHRZEUGGESPANN**

(30) Priorität: 07.11.2023 DE 102023130714
(71) Anmelder: Lemken GmbH & Co KG, 46519 Alpen (DE); KRONE Agriculture SE, 48480 Spelle (DE)
(72) Erfinder: Müter, Matthias, 53179 Bonn (DE); Röttgermann, Sebastian, 47608 Geldern (DE); Haverkamp, Stefan, 48346 Ostbevern (DE); Mählmann-Dunker, Hannes, 27251 Neuenkirchen (DE); Kreyenhagen, Michael, 49163 Bohmte (DE); Mäsing, Stefan, 46325 Borken (DE); Riesenbeck, Lothar, 48346 Ostbevern (DE)

(57) **Zusammenfassung**

Die vorliegende Erfindung betrifft ein landwirtschaftliches Fahrzeuggespann mit einem Zugfahrzeug und mindestens einer lösbar an das Zugfahrzeug angehängten, insbesondere autonomen, landwirtschaftlichen Arbeitsmaschine, wobei die Arbeitsmaschine mindestens zwei Achsen mit je mindestens einem Bodeneingriffsmittel aufweist, welche an einem Rahmen der Arbeitsmaschine angeordnet sind, und in einer Transportposition über eine Koppelvorrichtung mit dem Zugfahrzeug schwenkbar und lösbar verbunden ist. Erfindungsgemäß ist in der Transportposition zumindest eine, insbesondere zugfahrzeugseitige, Achse der angehängten Arbeitsmaschine als ausgehobene Achse derart angeordnet, dass die Bodeneingriffsmittel der ausgehobenen Achse bodenkontaktfrei angeordnet sind.

## Beschreibung

Die vorliegende Erfindung betrifft ein landwirtschaftliches Fahrzeuggespann mit einem Zugfahrzeug und mindestens einer an das Zugfahrzeug angehängten Arbeitsmaschine.

Neben landwirtschaftlichen Arbeitsmaschinen zur Feldbearbeitung, welche üblicherweise von einem Zugfahrzeug wie einem Traktor gezogen werden, sind auch selbstfahrende landwirtschaftliche Arbeitsmaschinen bekannt, welche bei der Feldbearbeitung durch einen Fahrer gesteuert und bedient werden. Bei einer Transportfahrt auf einem Weg zum oder vom Feld werden die Arbeitsmaschinen ebenfalls entweder von einem Zugfahrzeug gezogen oder durch einen eigenen Fahrer gefahren. Bei gezogenen Arbeitsmaschinen erfolgt dabei üblicherweise eine Energieversorgung, beispielsweise zum Bremsen und/oder Lenken, von dem Zugfahrzeug. Bei einer landwirtschaftlichen Arbeitsmaschine kann es sich dabei beispielsweise um eine Erntemaschine wie einen Feldhäcksler, einen Mähdrescher, eine Ballenpresse oder einen Ladewagen handeln. In der modernen Landtechnik wird eine höhere Automatisierung und autonome Bearbeitung von landwirtschaftlichen Prozessen angestrebt. Die hierfür entwickelten landwirtschaftlichen Arbeitsmaschinen weisen ähnlich den selbstfahrenden Arbeitsmaschinen eine eigene Energieversorgung sowie einen Antrieb und eine Lenkung auf und sind in der Lage autonom eine Feldbearbeitung durchzuführen, ohne dass ein Bediener oder Fahrer dauerhaft präsent sein muss. Eine landwirtschaftliche, insbesondere autonome, Arbeitsmaschine kann auch Anbaugeräte zur Feldbearbeitung, bspw. zum Pflügen, Düngen, Mähen, Zetten, zur Erntegutaufnahme oder dergleichen aufweisen.

Eine Transportfahrt zum oder vom Feld können oder dürfen diese autonomen Arbeitsmaschinen nicht selbständig und autonom durchführen, sondern müssen durch einen Fahrer gefahren oder mittels eines Tiefladers transportiert werden, was einen hohen zeitlichen und logistischen Arbeitsaufwand bedeutet und zu höheren Kosten führt.

Es ist daher die Aufgabe der vorliegenden Erfindung ein landwirtschaftliches Fahrzeuggespann anzugeben, welches einen zuverlässigen Transport der Arbeitsmaschine mit verringertem zeitlichen und/oder logistischen Aufwand ermöglicht.

Die Aufgabe wird gelöst durch ein landwirtschaftliches Fahrzeuggespann gemäß den Merkmalen des Anspruches 1. Vorteilhafte Ausgestaltungen der Erfindung sind in den Unteransprüchen angegeben.

Ein landwirtschaftliches Fahrzeuggespann mit einem Zugfahrzeug und mindestens einer lösbar an das Zugfahrzeug angehängten, insbesondere autonomen, landwirtschaftlichen Arbeitsmaschine, wobei die Arbeitsmaschine mindestens zwei Achsen mit je mindestens einem Bodeneingriffsmittel aufweist, welche an einem Rahmen der Arbeitsmaschine angeordnet sind, und in einer Transportposition über eine Koppelvorrichtung mit dem Zugfahrzeug schwenkbar und lösbar verbunden ist. Erfindungsgemäß ist in der Transportposition zumindest eine, insbesondere fahrzeugseitige Achse derart angeordnet, dass die Bodeneingriffsmittel der ausgehobenen Achse bodenkontaktfrei angeordnet sind.

An einer Achse der landwirtschaftlichen Arbeitsmaschine ist jeweils mindestens ein Bodeneingriffsmittel in Form eines, insbesondere jeweils antreibbaren, Rades oder eines Raupenlaufwerkes angeordnet. Eine Drehachse eines Bodeneingriffsmittels kann dabei im Wesentlichen rechtwinkelig zur Transportrichtung, Fahrtrichtung und/oder Arbeitsrichtung der Arbeitsmaschine sein. Bei einer Feldbearbeitung kann die Arbeitsmaschine gezogen werden oder selbständig fahren und ist in einer Arbeitsposition, in der die Achsen und zugeordneten Bodeneingriffsmittel im Bodeneingriff stehen können. In einer Transportposition kann die Arbeitsmaschine über eine Koppelvorrichtung mit einem Zugfahrzeug zu einem landwirtschaftlichen Fahrzeuggespann verbunden werden. Eine zum Transport, insbesondere auf einer öffentlichen Straße, an das Zugfahrzeug angehängte Arbeitsmaschine kann dabei wie ein Anhänger betrachtet werden. Denkbar ist auch eine Koppelung einer weiteren landwirtschaftlichen Arbeitsmaschine an die erste, mit dem Zugfahrzeug verbundene, Arbeitsmaschine. Eine Energieversorgung beispielsweise zum Bremsen, Lenken oder für eine Beleuchtung kann von dem Zugfahrzeug und/oder der Arbeitsmaschine selbst bereitgestellt werden.

In der Transportposition ist erfindungsgemäß zumindest eine, insbesondere eine zugfahrzeugseitige, Achse der angehängten Arbeitsmaschine als ausgehobene Achse derart angeordnet, dass die Bodeneingriffsmittel der ausgehobenen Achse bodenkontaktfrei angeordnet sind, also keinen Kontakt zum Boden aufweisen und die Arbeitsmaschine bzw. das Fahrzeuggespann so im Straßentransport bewegt werden kann. Eine Achse kann beispielsweise durch ein, insbesondere zugfahrzeugseitiges, Anheben der landwirtschaftlichen Arbeitsmaschine zu einer ausgehobenen Achse werden. Im Gegensatz zu einer ausgehobenen Achse kann eine tragende Achse bzw. dessen Bodeneingriffsmittel in der Transportposition in Kontakt mit dem Boden sein. Eine tragende und/oder ausgehobene Achse kann dabei in Form einer Tandemachse ausgestaltet sein.

Durch das Anhängen der Arbeitsmaschine an das Zugfahrzeug kann, besonders für den Straßentransport, mit geringem zeitlichen und logistischen Aufwand, ohne Tieflader, ein zuverlässiger Transport der landwirtschaftlichen Arbeitsmaschine ermöglicht werden. Durch die mindestens eine ausgehobene Achse kann ein Fahrverhalten der gezogenen Arbeitsmaschine bei einer Straßenfahrt verbessert werden, insbesondere für den Fall, dass die ausgehobene Achse eine nichtlenkende Achse ist.

Vorzugsweise ist mindestens eine Achse der Arbeitsmaschine relativ zum Boden und/oder dem Rahmen der Arbeitsmaschine anhebbar und/oder absenkbar ausgestaltet. Mindestens eine Achse der Arbeitsmaschine kann derart ausgestaltet und ausgebildet sein, dass beispielsweise durch eine mechanische, hydraulische und/oder pneumatische Aktorik, zumindest diese Achse anhebbar und/oder absenkbar ist. Hierbei kann in der Transportposition, insbesondere unabhängig von dem Zugfahrzeug, eine, insbesondere zugfahrzeugseitige, Achse in einen ausgehobenen Zustand gebracht werden, in dem eine erste, insbesondere zugfahrzeugseitige, Achse angehoben und/oder eine zweite Achse abgesenkt wird. Hierdurch kann beispielsweise eine lenkbare Achse abgesenkt und/oder zur tragenden Achse werden. Die Aktorik kann durch das Zugfahrzeug und/oder die Arbeitsmaschine mit der benötigten Energie versorgt werden. Dies hat den Vorteil, dass eine Transportposition des Fahrzeuggespanns mit zumindest einer ausgehobenen Achse erreicht werden kann, ohne dass das Zugfahrzeug für ein Anheben der Arbeitsmaschine ausgestattet sein muss.

In einer bevorzugten Ausgestaltung weist die Arbeitsmaschine achsmontierte lenkbare Bodeneingriffsmittel und/oder mindestens eine, insbesondere tragende, lenkbare Achse auf. Die lenkbare Achse und/oder die lenkbaren Bodeneingriffsmittel können in der Transportposition durch das Zugfahrzeug gesteuert bzw. gelenkt werden. Durch die lenkbare Achse und/oder die lenkbaren Bodeneingriffsmittel kann in der Transportposition ein Kurvenverhalten und eine Spurtreue der angehängten Arbeitsmaschine verbessert werden.

In einer weiter bevorzugten Ausgestaltung ist ein zugfahrzeugseitiger Bestandteil der Koppelvorrichtung derart ausgestaltet und ausgebildet, dass dieser, insbesondere in der Transportstellung, anhebbar, schwenkbar und/oder arretierbar ist. Durch eine zumindest zugfahrzeugseitig anhebbare und/oder höhenverstellbare Koppelvorrichtung kann ein Anheben der Arbeitsmaschine und zumindest einer Achse vereinfacht werden. Die Koppelvorrichtung kann dabei Dämpfungselemente zur Reduzierung von Schwingungen während des Transportes der angehängten Arbeitsmaschine aufweisen. Durch eine schwenkbare Ausgestaltung der Koppelvorrichtung in der Transportposition kann ein zuverlässiger Transport der angehängten Arbeitsmaschine während eines Transportes gewährleistet werden. Zumindest in der Transportposition ist die Koppelvorrichtung in einer vertikalen Richtung arretierbar, so dass Stützkräfte der angehängten Arbeitsmaschine aufgenommen werden können.

In einer bevorzugten Ausgestaltung umfasst die Koppelvorrichtung einen Heckkraftheber des Zugfahrzeugs, eine, insbesondere zugfahrzeugseitige, Kugelkopfkupplung, einen Koppeladapter, eine Deichsel und/oder einen Frontkraftheber der Arbeitsmaschine. Eine Koppelvorrichtung kann vielfältig ausgestaltet sein, auch in Form einer Kombination der genannten Ausgestaltungen. In Form eines Heckkrafthebers kann sie jedoch an fast jedem Traktor vorhanden sein, so dass hier eine kostengünstige Möglichkeit zum Anhängen der Arbeitsmaschine gegeben wäre, zumal über den Heckkraftheber ein Anheben der Arbeitsmaschine ohne weiteres erfolgen kann. Denkbar ist auch, dass die Koppelvorrichtung eine Kugelkopfkupplung umfasst, welcher insbesondere zugfahrzeugseitig angeordnet sein kann. Eine Koppelvorrichtung in Form eines Koppeladapters kann ein an das jeweilige Zugfahrzeug und/oder die anzuhängende Arbeitsmaschine angepasstes Verbindungselement sein, welches mit dem Zugfahrzeug und/oder der Arbeitsmaschine lösbar verbindbar sein kann. Der Koppeladapter kann dabei zusätzlich zur vertikalen Verlagerung einer angehängten Arbeitsmaschine eine Aktorik aufweisen. Dies hat den Vorteil, dass auch Zugfahrzeuge ohne eigene Hebeaktorik wie einem Heckkraftheber eine an den Koppeladapter angehängte Arbeitsmaschine anheben könnten. Der Koppeladapter kann dabei außerhalb eines Transportes am Zugfahrzeug oder der Arbeitsmaschine, beispielsweise an dessen Frontkraftheber, verbleiben. Die Koppelvorrichtung kann auch in Form einer hydraulischen Push-Back-Aufnahmekupplung (push-back pickup hitch) ausgestaltet sein, wodurch eine Kopplung der Arbeitsmaschine mit dem Zugfahrzeug in kurzer Zeit ermöglicht werden kann. Eine Deichsel als Koppelvorrichtung kann an der Arbeitsmaschine und/oder an dem Zugfahrzeug angeordnet sein, und insbesondere in einer Nicht-Transportposition, klappbar und/oder translatorisch verlagerbar ausgestaltet sein. Die Deichsel kann auch in Form einer Knickdeichsel ausgestaltet sein, welche insbesondere eine Aktorik zum Anheben der an das Zugfahrzeug gekoppelten Arbeitsmaschine aufweist. Dies hat den Vorteil, dass ein Zugfahrzeug ohne eigene Hebeaktorik ein erfindungsgemäßes Fahrzeuggespann bilden kann.

Vorteilhafterweise ist der Frontkraftheber der Arbeitsmaschine derart ausgestaltet und ausgebildet ist, dass dieser unmittelbar mit einem, insbesondere zugfahrzeugseitigen, Bestandteil der Koppelvorrichtung verbindbar ist. Der Frontkraftheber könnte unmittelbar an einen Heckkraftheber, beispielsweise dessen Unterlenker, oder eine zugfahrzeugseitige Kugelkopfkupplung koppelbar ausgebildet sein, wodurch eine einfache und schnelle Koppelung der Arbeitsmaschine mit dem Zugfahrzeug ermöglicht werden kann. Mittels des Frontkraftheber kann die Arbeitsmaschine gegenüber dem Zugfahrzeug abgestützt werden und durch ein nach unten gerichtetes Verlagern des Frontkrafthebers kann ein Anheben der Arbeitsmaschine und damit der zugfahrzeugseitigen Achse zu einer ausgehobenen Achse ermöglicht werden.

Vorzugsweise weist die Arbeitsmaschine ein Anbaugerät auf, welches mittels einer Anbauvorrichtung, insbesondere an einem dem Zugfahrzeug abgewandten Ende der Arbeitsmaschine, an dieser angeordnet ist. Ein Anbaugerät kann Werkzeuge zur Feldbearbeitung, insbesondere zur Bodenbearbeitung, Grünfutterernte, Aussaat, Pflanzenschutz oder Düngung, aufweisen und verlagerbar an der Arbeitsmaschine angeordnet sein. Das Anbaugerät kann eigene Bodeneingriffsmittel aufweisen, welche angetrieben und/oder lenkbar sein können. Durch ein Absenken des Anbaugerätes in einer Transportposition des Fahrzeuggespanns kann eine Achse des Anbaugerätes zu einer abgesenkten Achse werden, wodurch mindestens eine Achse der Arbeitsmaschine angehoben und zu einer ausgehobenen Achse werden kann.

Weiter bevorzugt weist die Arbeitsmaschine und/oder das Anbaugerät mindestens eine weitere Achse auf, welche derart ausgestaltet ist, dass diese für den Transport absenkbar und in Kontakt mit dem Boden bringbar ausgebildet ist. Diese weitere Achse kann in einer Transportposition des Fahrzeuggespanns, auch bei einer in eine Transportposition angehobene Arbeitsmaschine, abgesenkt werden und eine zusätzliche tragende Achse bilden, wodurch beispielsweise gesetzlich vorgegebene Achslasten eingehalten werden können.

In einer weiter bevorzugten Ausgestaltung ist die Anbauvorrichtung derart ausgebildet und ausgestaltet, dass neben einer vertikalen Verlagerung ein seitliches Schwenken relativ zu der Arbeitsmaschine ermöglicht wird. Eine seitliche Verlagerung des Anbaugerätes kann beispielsweise bei einem Anbaugerät mit Bodeneingriffsmitteln ein passives Nachlaufen des Anbaugerätes ermöglichen, wodurch besonders in Kurven ein zu weites seitliches Hinausragen des Anbaugerätes aus der Kurvenbahn bzw. Fahrspur vermieden werden und so die Sicherheit im Straßenverkehr erhöht werden kann.

In einer besonders bevorzugten Ausgestaltung erfolgt ein seitliches Verschwenken der Anbauvorrichtung und/oder der Koppelvorrichtung, insbesondere basierend auf Sensorsignalen, mittels eines oder mehrerer Aktoren. Ein seitliches Verschwenken der Koppelvorrichtung und/oder der Anbauvorrichtung kann aktiv über Aktoren und/oder ein passives Nachlaufen einer Arbeitsmaschine und/oder eines Anbaugerätes mit, insbesondere lenkbaren, Bodeneingriffsmitteln erfolgen. Um eine gewünschte seitliche Verschwenkung einstellen zu können, welche ein zu weites seitliches Verschwenken der Arbeitsmaschine und/oder des Anbaugerätes reduziert oder verhindert, werden von einer die Verschwenkung steuernde Steuereinheit Sensorsignale benötigt, welche durch unterschiedliche Sensoren bereitgestellt werden können. Ein Sensor kann dabei ein Trägheitssensor, Winkelsensor, insbesondere an der Koppelvorrichtung und/oder der Deichsel, Lenkwinkelsensoren am Zugfahrzeug und/oder Raddrehzahlsensoren sein.

Weitere Einzelheiten der Erfindung sind den Figuren und der Figurenbeschreibung zu entnehmen, die eine bevorzugte Ausführung der Erfindung zeigen.

Es zeigen:
- Fig 1:: eine Seitenansicht eines landwirtschaftlichen Fahrzeuggespanns;
- Fig. 2:: eine Seitenansicht eines landwirtschaftlichen Fahrzeuggespanns mit einem Koppeladapter;
- Fig. 3:: eine seitliche Ansicht eines Fahrzeuggespanns mit einer vertikal verlagerten, ausgehobenen Achse an einer landwirtschaftlichen Arbeitsmaschine;
- Fig. 4:: eine Seitenansicht eines Fahrzeuggespanns mit einer Knickdechsel; und
- Fig. 5:: eine Seitenansicht eines landwirtschaftlichen Fahrzeuggespanns mit einem absenkbaren Frontkraftheber.

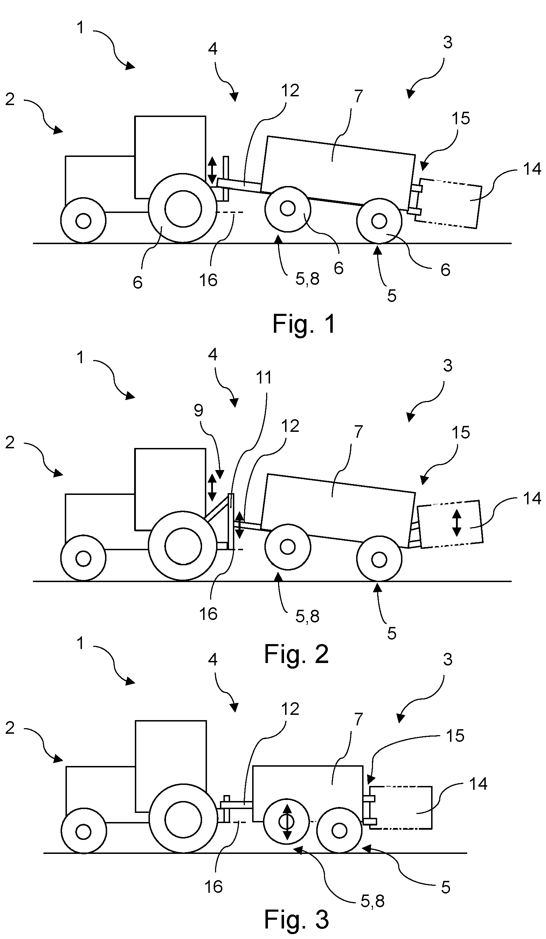

In Figur 1 ist ein landwirtschaftliches Fahrzeuggespann 1 mit einem Zugfahrzeug 2 in Form eines Traktors und einer an das Zugfahrzeug 2 angehängten landwirtschaftlichen Arbeitsmaschine 3 dargestellt. Bei der landwirtschaftlichen Arbeitsmaschine 3 kann es sich beispielsweise um eine autonome Arbeitsmaschine 3 handeln, welche in der dargestellten Transportposition zu einem Feld transportiert werden kann, um dieses dann unabhängig von dem Zugfahrzeug 2 autonom in einer Betriebsposition bearbeiten zu können. Die Arbeitsmaschine 3 weist einen Rahmen 7 auf, an dem zwei Achsen 5 mit daran angeordneten Bodeneingriffsmitteln 6 in Form von Rädern angeordnet sind. Die Achsen 5 und/oder Bodeneingriffsmittel 6 können dabei lenkbar ausgestaltet sein.

An einer dem Zugfahrzeug 2 abgewandten Seite weist die Arbeitsmaschine 3 ein Anbaugerät 14 auf, welches beispielsweise Werkzeuge zur Bodenbearbeitung (nicht dargestellt) tragen kann. Das Anbaugerät 14 ist über eine Anbauvorrichtung 15 verschwenkbar mit der Arbeitsmaschine 3 verbunden. Über die Anbauvorrichtung 15 kann eine in Richtung des Bodens gerichtete einstellbare Vorspannkraft auf das Anbaugerät 14 und Bodenwerkzeuge (nicht dargestellt) ausgeübt werden.

Über eine Koppelvorrichtung 4 ist die Arbeitsmaschine 3 mit dem Zugfahrzeug 2 lösbar verbunden. Die Koppelvorrichtung 4 umfasst dabei arbeitsmaschinenseitig eine zumindest in vertikaler Richtung starre Deichsel 12, welche auch in einer Betriebsposition an der Arbeitsmaschine 3 verbleiben kann, und zugfahrzeugseitig eine höhenverstellbare Aufnahme. Die Aufnahme ist dabei zugfahrzeugseitig von einer Ausgangsposition 16 angehoben, wodurch über die starre Deichsel 12 auch die Arbeitsmaschine 3 zugfahrzeugseitig angehoben wird.

Gemäß der Erfindung wird hierbei eine zugfahrzeugseitige Achse 5 der Arbeitsmaschine 3 und deren Bodeneingriffsmittel 6 vom Boden abgehoben, so dass diese Achse 5 eine ausgehobene Achse 8 ist, und die angehängte Arbeitsmaschine 3 nur über die hintere Achse 5, eine tragende Achse, am Boden abgestützt ist. In Fig. 2 ist ein landwirtschaftliches Fahrzeuggespann 1 in einer erfindungsgemäßen Transportposition mit einer teilweise angehobenen Arbeitsmaschine 3 dargestellt. Die Koppelvorrichtung 4 umfasst hierbei zugfahrzeugseitig einen höhenverstellbaren Heckkraftheber 9 sowie einen daran angeordneten Koppeladapter 11, welcher eine höhenverstellbare Aufnahme für eine Deichsel 12 der Arbeitsmaschine 3 aufweist. Ein Ausheben der Arbeitsmaschine 3 und ein Verbringen einer zugfahrzeugseitigen Achse 5 in eine ausgehobene Achsstellung kann durch Anheben des Heckrafthebers 9 und/oder, so wie hier dargestellt, durch ein Höhenverstellen der Deichselaufnahme in dem Koppeladapter 11 erfolgen. Das heckseitig an der Arbeitsmaschine 3 angeordnete Anbaugerät 14 ist zur Vermeidung einer Bodenkollision mittels der Anbauvorrichtung 15 angehoben.

Bei dem in Fig. 3 dargestellten Fahrzeuggespann 1 ist die Arbeitsmaschine 3 mittels einer Deichsel 12 an das Zugfahrzeug 2 angehängt. Die Arbeitsmaschine 3 weist dabei zugfahrzeugseitig eine höhenverstellbare Achse 5 auf, welche in einer angehobenen Position dargestellt ist, so dass die Achse 5,8 ausgehoben ist.

Denkbar ist auch, dass die hintere Achse 5 oder beide Achsen 5 höhenverstellbar sind. Dann könnte die hintere Achse 5 abgesenkt werden, so dass die zugfahrzeugseitige Achse 5 zur ausgehobenen Achse 8 wird. Ebenfalls könnte die hintere Achse 5 etwas abgesenkt und die vordere, zugfahrzeugseitige Achse 5 angehoben werden, damit die zugfahrzeugseitige Achse 5 die ausgehobene Achse 8 wird.

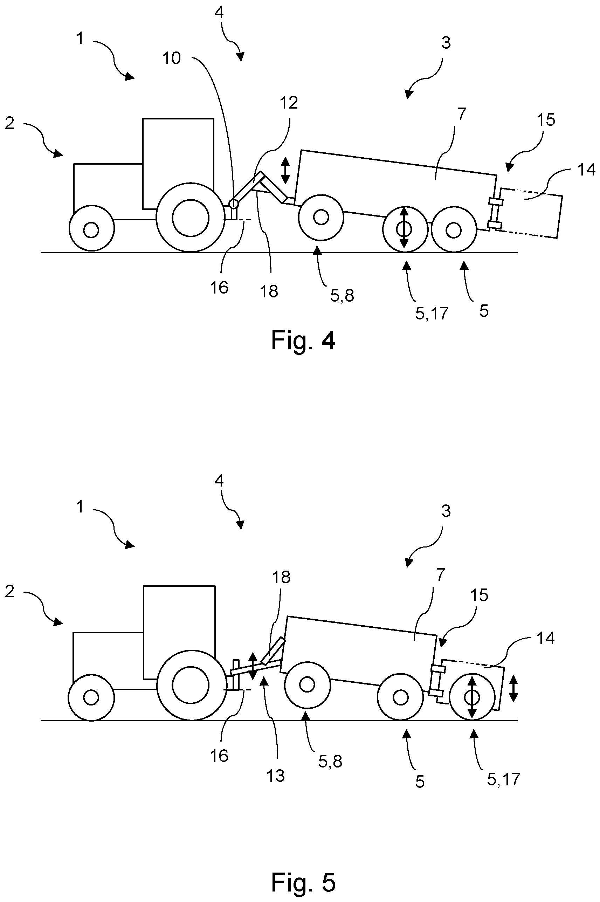

Das in Fig. 4 dargestellte Zugfahrzeug 2 weist heckseitig eine Kugelkopfkupplung 10 auf, welche in der Ausgangsposition 16 angeordnet ist. Dies hat den Vorteil, dass das Zugfahrzeug 2 keinerlei Hebeaktorik aufweisen muss. Auf der Kugelkopfkupplung 10 ist die Deichsel 12 der Arbeitsmaschine 3 abgestützt. Die Deichsel 12 der Arbeitsmaschine 3 ist dabei in Form einer Knickdeichsel mit einem Aktor 18 zum Anheben der Arbeitsmaschine 3 ausgestaltet. Die in Transportposition verbrachte Arbeitsmaschine 3 weist zugfahrzeugseitig eine ausgehobenen Achse 5,8 auf und ist über eine hintere Achse 5 als tragende Achse gegenüber dem Boden abgestützt. Zusätzlich weist die Arbeitsmaschine 3 eine weitere Achse 17 auf, welche ebenfalls an dem Rahmen 7 der Arbeitsmaschine 3 angeordnet ist. Die weitere Achse 17 ist dabei zwischen der ausgehobenen Achse 8 und der hinteren tragenden Achse 5 angeordnet. Die weitere Achse 17 weist mindestens ein Bodeneingriffsmittel 6 auf, hier in Form eines Rades dargestellt. Die weitere Achse 17 ist höhenverstellbar und in einer abgesenkten Position als tragende Achse dargestellt, wobei das mindestens eine Bodeneingriffsmittel 6 Bodenkontakt aufweist. Dies hat den Vorteil, dass das Gewicht der Arbeitsmaschine 3 nicht nur auf der hinteren tragenden Achse 5 ruht, sondern wieder auf zwei tragende Achsen 5, 17 verteilt wird, so dass gesetzliche Vorgaben beispielsweise zu Achslasten eingehalten werden können.

Die weitere Achse 17 (Fig. 5) kann auch an dem Anbaugerät 14 angeordnet sein. Die weitere Achse 17 am Anbaugerät 14 kann dabei höhenverstellbar ausgebildet sein und/oder über eine Höhenverstellung des Anbaugerätes 14 mittels der Anbauvorrichtung 15, so wie in Fig. 5 dargestellt, in Bodenkontakt als tragende Achse 17 verbracht werden. Die dargestellte Arbeitsmaschine 3 weist zudem zugfahrzeugseitig einen mittels eines Aktors 18 höhenverstellbaren Frontkraftheber 13 auf, welcher zugfahrzeugseitig abgestützt ist, wobei durch den abgesenkten Frontkraftheber 13 die Arbeitsmaschine 3 zugfahrzeugseitig angehoben ist.

### Bezugszeichen

- 1: Fahrzeuggespann
- 2: Zugfahrzeug
- 3: Arbeitsmaschine
- 4: Koppelvorrichtung
- 5: Achse
- 6: Bodeneingriffsmittel
- 7: Rahmen
- 8: Ausgehobene Achse
- 9: Heckkraftheber
- 10: Kugelkopfkupplung
- 11: Koppeladapter
- 12: Deichsel
- 13: Frontkraftheber
- 14: Anbaugeräte
- 15: Anbauvorrichtung
- 16: Ausgangsposition
- 17: Weitere Achse
- 18: Aktor

## Patentansprüche

1. Landwirtschaftliches Fahrzeuggespann (1) mit einem Zugfahrzeug (2) und mindestens einer lösbar an das Zugfahrzeug (2) angehängten, insbesondere autonomen, landwirtschaftlichen Arbeitsmaschine (3), wobei die Arbeitsmaschine (3) mindestens zwei Achsen (5) mit je mindestens einem Bodeneingriffsmittel (6) aufweist, welche an einem Rahmen (7) der Arbeitsmaschine (3) angeordnet sind, und in einer Transportposition über eine Koppelvorrichtung (4) mit dem Zugfahrzeug (2) schwenkbar und lösbar verbunden ist **dadurch gekennzeichnet, dass** in der Transportposition zumindest eine, insbesondere zugfahrzeugseitige, Achse (5) der angehängten Arbeitsmaschine als ausgehobene Achse (8) derart angeordnet ist, dass die Bodeneingriffsmittel (6) der ausgehobenen Achse (8) bodenkontaktfrei angeordnet sind.

2. Fahrzeuggespann nach Anspruch 1, **dadurch gekennzeichnet, dass** mindestens eine Achse (5) der Arbeitsmaschine (3) relativ zum Boden und/oder dem Rahmen (7) der Arbeitsmaschine (3) anhebbar und/oder absenkbar ausgestaltet ist.

3. Fahrzeuggespann nach Anspruch 1 oder 2, **dadurch gekennzeichnet, dass** die Arbeitsmaschine (3) achsmontierte lenkbare Bodeneingriffsmittel (6) und/oder mindestens eine, insbesondere tragende, lenkbare Achse (5) aufweist.

4. Fahrzeuggespann nach einem der vorhergehenden Ansprüche, **dadurch gekennzeichnet, dass** ein, insbesondere zugfahrzeugseitiger, Bestandteil der Koppelvorrichtung (4) derart ausgestaltet und ausgebildet ist, dass dieser, insbesondere in der Transportstellung, anhebbar, schwenkbar und/oder arretierbar ist.

5. Fahrzeuggespann nach einem der vorherigen Ansprüche, **dadurch gekennzeichnet, dass** die Koppelvorrichtung (4) einen Heckkraftheber (9) des Zugfahrzeugs (2), eine, insbesondere zugfahrzeugseitige, Kugelkopfkupplung (10), einen Koppeladapter (11), eine Deichsel (12) und/oder einen Frontkraftheber (13) der Arbeitsmaschine (2) umfasst.

6. Fahrzeuggespann nach einem der vorhergehenden Ansprüche, **dadurch gekennzeichnet, dass** der Frontkraftheber (13) der Arbeitsmaschine (3) derart ausgestaltet und ausgebildet ist, dass dieser unmittelbar mit einem, insbesondere zugfahrzeugseitigen, Bestandteil der Koppelvorrichtung (4) verbindbar ist.

7. Fahrzeuggespann nach einem der vorhergehenden Ansprüche, **dadurch gekennzeichnet, dass** die Arbeitsmaschine (3) ein Anbaugerät (14) aufweist, welches mittels einer Anbauvorrichtung (15), insbesondere an einem dem Zugfahrzeug (2) abgewandten Ende der Arbeitsmaschine (3), an dieser angeordnet ist.

8. Fahrzeuggespann nach einem der vorherigen Ansprüche, **dadurch gekennzeichnet, dass** die Arbeitsmaschine (3) und/oder das Anbaugerät (14) mindestens eine weitere Achse (17) aufweist, welche derart ausgestaltet ist, dass diese für den Transport absenkbar und in Kontakt mit dem Boden bringbar ausgebildet ist.

9. Fahrzeuggespann nach einem der vorherigen Ansprüche, **dadurch gekennzeichnet, dass** die Anbauvorrichtung (15) derart ausgebildet und ausgestaltet ist, dass neben einer vertikalen Verlagerung ein seitliches Schwenken relativ zu der Arbeitsmaschine (3) ermöglicht wird.

10. Fahrzeuggespann nach einem der vorhergehenden Ansprüche, **dadurch gekennzeichnet, dass** ein seitliches Verschwenken der Anbauvorrichtung (15) und/oder der Koppelvorrichtung (4), insbesondere basierend auf Sensorsignalen, mittels eines oder mehrerer Aktoren erfolgt.
